# EUROPEAN PATENT APPLICATION

(11) **EP 2 779 627 A1**
(43) Date of publication of application: **17.09.2014**
(21) Application number: 13275061.3
(22) Date of filing: 14.03.2013
(51) Int. Cl.: H04N 5/232, H04N 5/33

(54) **Operating sensors**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Disclosed are methods and apparatus for operating a sensor (14). The methods comprise: acquiring, by an intermediate module (10), from a sensor unit (8), configuration data, the sensor unit comprising the sensor (14), the configuration data relating to the sensor (14); acquiring, by one or more further modules (18), from the intermediate module (10), the configuration data relating to the sensor (14); and using the configuration data, acquiring, by one or more of the further modules (18), a set of algorithms comprising one or more algorithms selected from the group of algorithms consisting of: control algorithms for controlling the operation of the sensor (14), and data processing algorithms for processing sensor data output by the sensor (14).

## Description

### FIELD OF THE INVENTION

The present invention relates to operating sensors.

### BACKGROUND

Unmanned Air Vehicles (UAVs) are used in many different types of operations.

In order to be able to perform a certain type of operation, a UAV may have to be equipped with a certain set of sensors. For example, a surveillance operation may require that the UAV is equipped with an imaging sensor such as a camera.

The sensors used to perform one type of operation may be different to the sensors that are used to perform a different type of operation.

Equipping a UAV with new sensors, updating sensors onboard a UAV, and/or replacing onboard sensors with different types of sensor tends to be time consuming and costly. Bespoke software and/or hardware interfaces may be required to enable the new/updated sensors to function with other systems onboard the UAV.

### SUMMARY OF THE INVENTION

In a first aspect, the present invention provides a method of operating a sensor, the method comprising: acquiring, by an intermediate module, from a sensor unit, configuration data, the sensor unit comprising a sensor, the configuration data relating to the sensor; acquiring, by one or more further modules, from the intermediate module, the configuration data relating to the sensor; and using the configuration data, acquiring, by one or more of the further modules, a set of algorithms comprising one or more algorithms selected from the group of algorithms consisting of: control algorithms for controlling the operation of the sensor; and data processing algorithms for processing sensor data output by the sensor.

The method may further comprise, for each of one or more further sensor units, acquiring, by the intermediate module, from that further sensor unit, further configuration data, wherein each further sensor unit comprises a further sensor and the further configuration data acquired from that further sensor unit relates to the further sensor of that further sensor unit. The method may further comprise, for each further sensor, acquiring, by one or more of the further modules, from the intermediate module, the further configuration data relating to that further sensor unit. The method may further comprise, for each further sensor, using the further configuration data relating to that further sensor, acquiring, by a further module that acquired the further configuration data relating to that further sensor, a set of algorithms comprising one or more algorithms selected from the group of algorithms consisting of: control algorithms for controlling the operation of that further sensor, and data processing algorithms for processing sensor data output by that further sensor.

The sensor and each of the further sensors may be different types of sensor.

The sensor and each of the further sensors may be coupled to the intermediate module using the same type of interface.

The acquired set of algorithms may comprise a control algorithm. The method may further comprise: using the acquired control algorithm, generating, by a further module, a control signal for the sensor; and sending, by the further module that generated the control signal, to the sensor, the control signal, thereby controlling the operation of the sensor.

The control signal may be sent from the further module to the sensor via the intermediate module.

The acquired set of algorithms may comprise a data processing algorithm. The method may further comprise: by the sensor, taking measurements and outputting sensor data; receiving, by a further module that acquired a data processing algorithm, the sensor data output by the sensor; and, by the further module that acquired a data processing algorithm, using the acquired data processing algorithm, processing the sensor data output by the sensor.

The sensor data output by the sensor may be sent from the sensor to the further module that acquired a data processing algorithm via the intermediate module.

The step of acquiring one or more algorithms may comprise, using the configuration data, selecting, from a database containing a plurality of different algorithms, one or more algorithms that are suitable for use with the sensor.

The plurality of different algorithms that are contained within the database may be a hierarchy of algorithms. The step of selecting one or more algorithms that are for suitable use with the sensor may comprise selecting, from the hierarchy of algorithms, at least the first algorithm in the hierarchy that is suitable for use with the sensor.

The method may further comprise acquiring, from the intermediate module, by the sensor unit, a request that configuration data relating to the sensor of the sensor unit be returned to the intermediate module. The step of sending the configuration data relating to the sensor from the sensor unit to the intermediate module may be performed in response to the sensor unit receiving the request.

The intermediate module and the sensor units may be onboard a vehicle e.g. an aircraft e.g. an unmanned air vehicle.

In a further aspect, the present invention provides apparatus for operating a sensor, the apparatus comprising: a sensor unit comprising a sensor; an intermediate module configured to acquire, from the sensor unit, configuration data relating to the sensor; and one or more further modules configured to: acquire, from the intermediate module, the configuration data relating to the sensor; and, using the configuration data, acquire a set of algorithms comprising one or more algorithms selected from the group of algorithms consisting of: control algorithms for controlling the operation of the sensor, and data processing algorithms for processing sensor data output by the sensor.

In a further aspect, the present invention provides a program or plurality of programs arranged such that when executed by a computer system or one or more processors it/they cause the computer system or the one or more processors to operate in accordance with the method of any of the above aspects.

In a further aspect, the present invention provides a machine readable storage medium storing a program or at least one of the plurality of programs according to the preceding aspect.

### BRIEF DESCRIPTION OF THE DRAWINGS

Figure 1 is a schematic illustration (not to scale) of an example scenario;
Figure 2 is a schematic illustration (not to scale) of an unmanned air vehicle;
Figure 3 is a schematic illustration (not to scale) of a sensor unit;
Figure 4 is a schematic illustration (not to scale) of a sensor controller; and
Figure 5 is a process flow chart showing certain steps of a process implemented using the apparatus described with reference to Figures 1 to 4.

### DETAILED DESCRIPTION

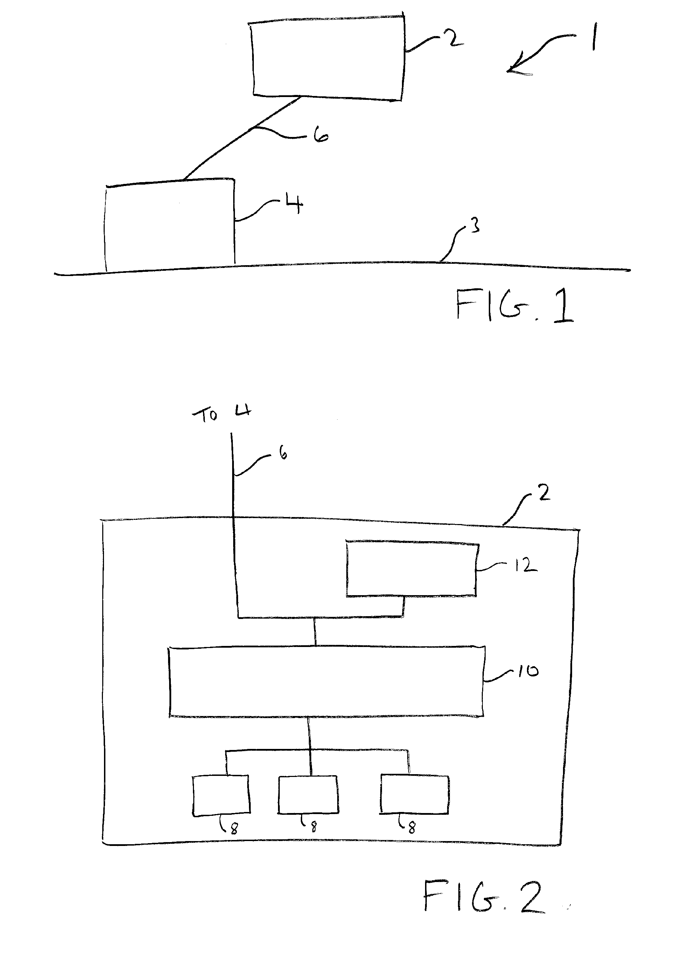

Figure 1 is a schematic illustration (not to scale) of an example scenario 1 in which an embodiment of a sensor interface system is implemented.

In the scenario 1, an unmanned air vehicle (UAV) 2 files over an area of terrain 3. As the UAV 2 flies over the terrain 3, the UAV 2 communicates with a ground station 4 via a wireless data-link 6. The data-link 6 is such that information may be sent between the UAV 2 and the ground station 4. The UAV 2 may, for example, be controlled by an operator (e.g. a human operator) located at the ground station 4.

Figure 2 is a schematic illustration (not to scale) of the UAV 2.

In this embodiment, the UAV 2 comprises a plurality of sensor units 8, a sensor hub 10, and a processing and control module 12.

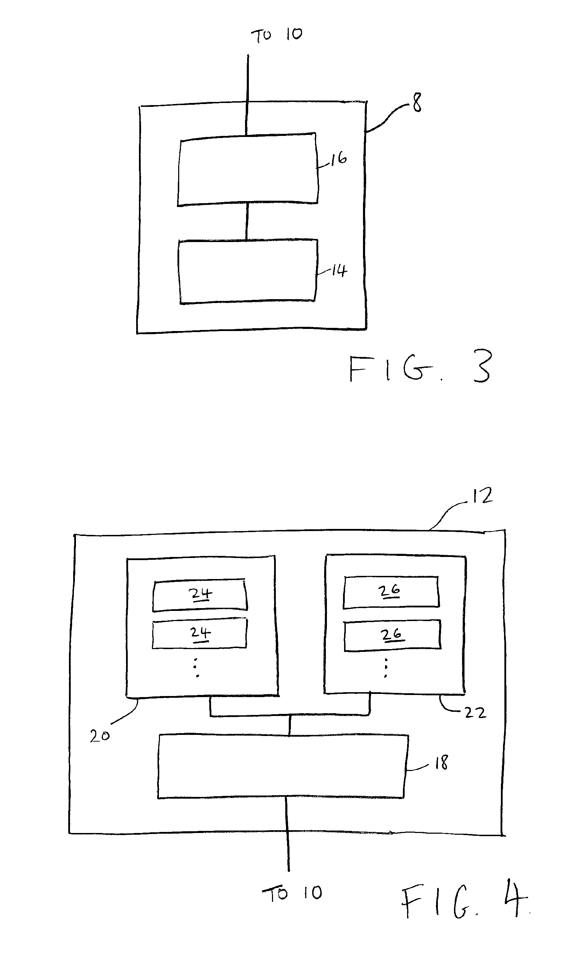

The sensor units 8 are described in more detail later below with reference to Figure 3. The sensor units 8 are connected to the sensor hub 10 such that information may be sent between each of the sensor units 8 and the sensor hub 10.

In addition to being coupled to the sensor units 8, in this embodiment the sensor hub 10 is coupled to the processing and control module 12. This is such that information may be sent between the sensor hub 10 and the processing and control module 12. Also, the sensor hub 10 is coupled to the wireless data-link 6 such that information may be sent between the sensor hub 10 and the ground station 4.

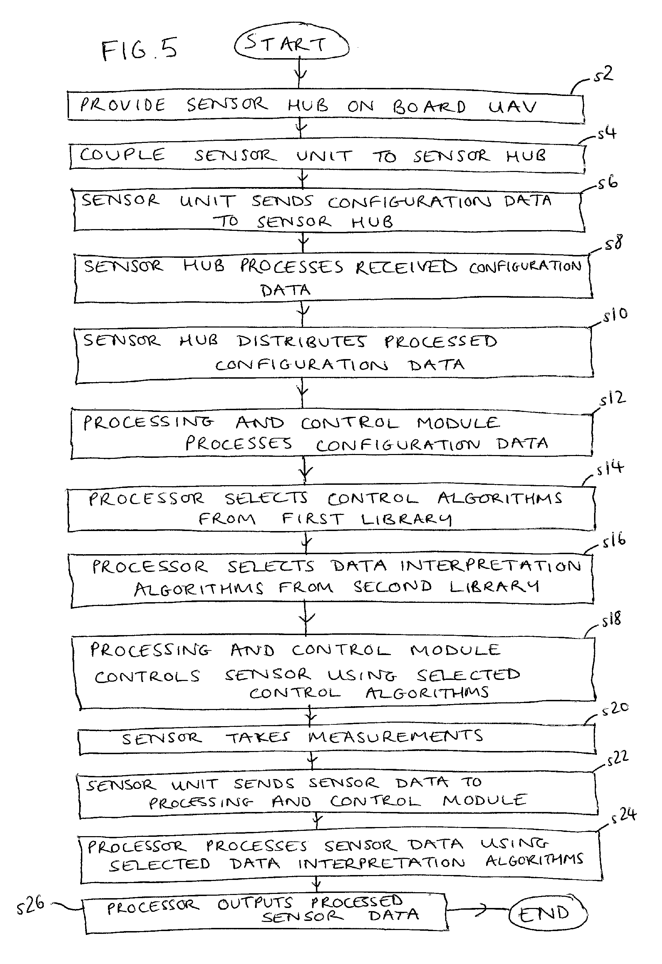

As described in more detail later below with reference to Figure 5, in operation, data received by the sensor hub 10 (e.g. from the sensor units 8) is processed by the sensor hub 10 and distributed from the sensor hub 10 to the processing and control module 12 and/or the ground station 4 (i.e. via the data-link 6).

The sensor hub 10 may also provide power to each of the sensor units 8.

The processing and control module 12 is described in more details later below with reference to Figure 4. The processing and control module 12 is configured to control the operation of the sensor 14 and also process measurement data captured by the sensor 14. In other embodiments, the control of the sensor and the processing of sensor data may be performed by different respective modules (i.e. in some embodiments the UAV 2 comprises a module for controlling the sensors 14 and a separate, different module for processing sensor data).

As described in more detail later below with reference to Figure 5, in operation, data received by the processing and control module 12 (e.g. from the sensor hub 10) is processed and utilised by the processing and control module 12.

Also as described in more detail later below with reference to Figure 5, in this embodiment, the processing and control module 12 is further configured to control one or more of the sensor units 8 (via the sensor hub 10).

Figure 3 is a schematic illustration (not to scale) of one of the plurality of sensor units 8.

In this embodiment, a sensor unit 8 comprises a sensor 14 and a sensor management module 16.

The sensor 14 may be any appropriate type of sensor including, but not limited to, a camera (e.g. an infrared, visible-light, or ultraviolet camera), or a range sensor (e.g. a laser range sensor).

In this embodiment, one or more of the sensors 14 in a sensor unit 8 may be a different type of sensor 14 to a sensor 14 in a different sensor unit 8. Alternatively, each of the sensor units 8 may include the same types of sensor 14.

The sensor 14 is coupled to the sensor management module 16 such that information may be sent between the sensor 14 and the sensor management module 16.

In this embodiment, the sensor management module 16 is an intermediate module for processing signals to and from the sensor 14 to which it is coupled.

The sensor management module 16 may act as a bridge between the sensor hub 10 and the interfaces of the sensor 14. In some embodiments, some or all of the functionality provided by the sensor management module 16 is provided by the sensor 14 and vice versa.

This sensor management module 16 may perform some or all of the following functions: (1) provide a hardware interface to bridge between the sensor's physical interfaces and sensor hub's physical interface; (2) provide a protocol bridge to convert data between the protocols / messages used by the sensor 14 and those used by the sensor hub 10 and vice versa; and (3) provide an element of sensor management to increase the functionality of the sensor. In some embodiments, the sensor management module 16 also converts power supplied by the sensor hub 10 (e.g. 28Vdc / 115Vac power) to that used by the sensor 14 (e.g. 12Vdc power).

In some embodiments, the sensor management module 16 comprises a "signal concentrator" which is a computing module which may be collocated with a sensor (or sensors) and provide a bridge between bespoke electrical/data interfaces of that sensor (or sensors) and the sensor hub 10.

Also, in this embodiment, the sensor management module 16 comprises information relating to the sensor 14 to which it is coupled. In particular, in this embodiment, the sensor management module 16 comprises "identification information" for the sensor 14 (i.e. information that may be used, e.g. by the processing and control module 12, to identify the type, make/ model etc. of the sensor 14) and "operational information" for the sensor 14 (i.e. a specification of the types of control signals that may be used to control that sensor 14, a specification of the type or format of the data output by that sensor 14, a specification of control parameters for that sensor 14 (e.g. zoom levels, rotation ranges etc., for example if the sensor 14 is a gimbal-mounted camera)). The information relating to the sensor 14 that is stored in the sensor management module coupled to that sensor 14 may be stored (e.g. in a database within the sensor management module 16) in any appropriate format e.g. an XML data-file.

As described in more detail later below with reference to Figure 5, in operation, information relating to a sensor 14 (e.g. the identification and/or operational information for the sensor 14) may be sent from the sensor management module 16 coupled to that sensor 14, via the sensor hub 10, to the processing and control module 12.

Also, in operation, information may be sent from the processing and control module 12, via the sensor hub 10 and a sensor management module 16, to the sensor 14 coupled to that sensor management module 16. For example, a control signal for controlling the operation of a sensor 14 may be sent from the processing and control module 12 to that sensor 14.

Figure 4 is a schematic illustration (not to scale) of the processing and control module 12.

In this embodiment, the processing and control module 12 comprises a processor 18, a first data library or database (hereinafter referred to as the "first library" and indicated in Figure 4 by the reference numeral 20), and a second data library or database (hereinafter referred to as the "second library" and indicated in Figure 4 by the reference numeral 22).

The processor 18 is coupled to the sensor hub 10 such that information may be sent between the processor 18 and the sensor hub 10. Also, the processor 18 is coupled to each of the libraries 20, 22 such that the processor may retrieve, from a library 20, 22, data stored within that library.

As described in more detail later below with reference to Figure 5, in operation the processor 18 processes information received by the processing and control module 12 from the sensor hub 10. For example, the processor 18 may process identification and/or operational information relating to a sensor 14. Also for example, the processor 18 may process sensor data received from a sensor 14.

Also, as described in more detail later below with reference to Figure 5, in operation the processor 18 retrieves and processes data stored in either or both of the libraries 20, 22.

Also, as described in more detail later below with reference to Figure 5, in operation the processor 18 may transmit information for use by an entity remote from the processor 18. For example, the processor 18 may determine a control signal for controlling a sensor 14, and transmit that control signal, via the sensor hub 10, to the sensor to be controlled. Also for example the processor 18 may transmit processed sensor measurements for use by entities remote from the processor 18 (e.g. to the ground station 4 via the data-link 6).

The first library 20 comprises a plurality of sets of control algorithms 24. The control algorithms 24 may, for example, be stored as software modules in the first library 20. The software modules may be replaced or removed from the first library 20, or new software modules containing new control algorithms may be added to the first library 20. In this embodiment, the control algorithms 24 are used to created control codes for controlling a sensor 14.

Each respective set of control algorithms 24 comprises algorithms that may be used to create control commands or codes for controlling the operation of a respective type of sensor. In some embodiments, the control algorithms within a set of control algorithms 24 may be used to create codes for controlling more than one type of sensor.

For example, a set of control algorithms 24 may be used to create "directional commands" for changing the direction in which a sensor 14 points, "capture commands" for controlling a sensor 14 so as to capture data/take measurements, "mode commands" for changing the mode or setting in which the sensor is operating, etc.

Each set of control algorithms 24 further comprises (or is associated with) information that identifies the types of sensors that that set of control algorithms 24 may be used to control.

In this embodiment, the sets of control algorithms 24 within the first library 20 are arranged hierarchically. In this embodiment, the sets of control algorithms 24 are arranged in order of preference (e.g. as selected by a human operator). Thus, there may be a plurality of different sets of control algorithms 24 that may be useable to control a particular type of sensor 14. However, one or more of these different sets of control algorithms 24 may be more preferable than the other sets of control algorithms 24. A "more preferable" set of control algorithms 24 may, for example, allow for control of a sensor 14 with greater fidelity, allow for more functionality, etc. compared to "less preferable" (but still useable) sets of control algorithms 24.

The second library 22 comprises a plurality of sets of data interpretation algorithms 26 (i.e. sets of algorithms that may be used to process, analyse and/or interpret data from one or more sensors 14).

Each respective set of data interpretation algorithms 26 comprises algorithms that may be used to process sensor data from a respective type of sensor. In some embodiments, the algorithms within a set of data interpretation algorithms 26 may be used to process data generated by more than one type of sensor.

For example, a set of data interpretation algorithms 26 may include algorithms for processing image data (i.e. data measured by a camera) and formatting that data such that it may be displayed (e.g. on a display e.g. at the ground station 4).

Each set of data interpretation algorithms 26 further comprises (or is associated with) information that identifies the types of sensors, or types of sensor data, that that set of data interpretation algorithms 26 may be used to process/analyse.

In this embodiment, the sets of data interpretation algorithms 26 within the second library 22 are arranged hierarchically. In this embodiment, the sets of data interpretation algorithms 26 are arranged in order of preference (e.g. as selected by a human operator). Thus, there may be a plurality of different sets of data interpretation algorithms 26 that may be useable to process a particular type of sensor data. However, one or more of these different sets of data interpretation algorithms 26 may be more preferable than the other sets of data interpretation algorithms 26. A "more preferable" set of data interpretation algorithms 26 may, for example, provide more through data analysis compared to "less preferable" (but still useable) sets of data interpretation algorithms 26.

Apparatus, including the processor 18 and any other data processing apparatus, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 5 is a process flow chart showing certain steps of an embodiment of a process implemented using the apparatus described above with reference to Figures 1 to 4.

It should be noted that certain of the process steps depicted in the flowchart of Figure 5 and described below may be omitted or such process steps may be performed in differing order to that presented above and shown in Figure 5. Furthermore, although all the process steps have, for convenience and ease of understanding, been depicted as discrete temporally-sequential steps, nevertheless some of the process steps may in fact be performed simultaneously or at least overlapping to some extent temporally.

At step s2, the sensor hub 10 is provided onboard the UAV 2 in such a way that sensor units 8 may be coupled to the sensor hub 10, and in such a way that information may be sent between the sensor hub 10 and the processing and control module 12 (and to the ground station 4 via the data-link 6).

At step s4, a sensor unit 8 is coupled to the sensor hub 10. This may, for example, be performed whilst the UAV 2 is on the ground (i.e. not airborne) by a human operator "plugging-in" the sensors unit 8 into the sensor hub 10 (or by powering up the sensor units 8 coupled to the sensor hub 10) such that information may be sent between the sensor management module 16 of that sensor unit 8 and the sensor hub 10.

At step s6, the sensor unit 8 that was coupled to the sensor hub at step s4 sends the information relating to its sensor 14 (i.e. the identification and operational information for the sensor 14 of that sensor unit 8 that is stored in the sensor management module 16 of that sensor unit 8) to the sensor hub 10. This information may be transferred in any appropriate format, e.g. as an XML data-file, and using any appropriate communication protocol.

In some embodiments, the identification and operational information for the sensor 14 may be sent from the sensor unit 8 to the sensor hub 10 in response to the sensor unit 8 receiving (e.g. from the sensor hub) a "configuration request" message.

Prior to identification and operational information being sent from the senor unit 8, a connection (for example a Transport Control Protocol (TCP) and Internet Protocol (IP) connection) between the sensor unit 8 and the sensor hub 10 (or other modules, such as the processing and control module 12, via the sensor hub 10) may be formed. If for some reason such a connection cannot be formed, it may be assumed that the sensor unit 8 has malfunctioned and appropriate action may be taken. Once such a connection is formed, the sensor hub 10 may interrogate the sensor unit 8 to obtain identification and operational information for the sensor 14.

At step s8, the sensor hub 10 processes the received identification and operational information relating to the sensor 14 of the sensor unit 8 that has been coupled to the sensor hub 10. This may, for example, be performed to determine which entities the received identification and operational information is to be redistributed to. Also, this may, for example, be performed to provide that the identification and operational information is in a format that is useable by the entities to which that data is to be redistributed.

In this embodiment, the sensor hub 10 determines that the received identification and operational information is to be sent to the processing and control module 12, for use by the processing and control module 12. Also, the sensor hub 10 processes the received identification and operational information such that that data is useable by the processing and control module 12.

At step s10, the sensor hub 10 sends the processed identification and operational information relating to the sensor 14 to the processing and control module 12 (i.e. to the processor 18 of the processing and control module 12).

Thus, the processor 18 is sent a collated set of configuration data for the sensor unit 8 (which may include sensor capabilities for the sensor 14 e.g. details of task types that can be performed by the sensor 14).

At step s12, the processor 18 receives and processes the identification and operational information relating to the sensor 14.

In this embodiment, the processor 18 processes the identification and operational information relating to the sensor 14 to identify a "sensor type" of the sensor 14.

Also, in this embodiment, the processor 18 processes the identification and operational information relating to the sensor 14 to determine how to communicate with the sensor 14.

At step s14, the processor 18 selects a set of control algorithms 24 from the first library 20.

In some embodiments, the selection of control algorithms 24 is performed in response to a task information (i.e. details specifying a task that is to be performed by the UAV 2 using the sensors 14) being received by the UAV 2. Which control algorithms 24 are selected may, for example, be dependent upon the task that is to be performed by the UAV 2, and the sensors 14 that are to be implemented in the performance of that task. In some embodiments, task information (i.e. information specifying the task that is to be performed by the UAV 2) may be pre-loaded into systems of the UAV 2 e.g. prior to take-off of the UAV 2.

In this embodiment, this selection is performed by the processor 18 searching through, in order, the stored hierarchy of sets of control algorithms 24, and selecting the first set of control algorithms 24 in that hierarchy that is applicable to a sensor having a the "sensor type" determined at step s12.

In other words, at step s14 the processor 18 searches, in order, the stored, ordered sets of control algorithms 24, and identifies the first set of control algorithms 24 that may be used to create control commands for controlling the sensor 14 of the sensor unit 8 that was coupled to the sensor hub at step s4.

In some embodiments, other factors (such as the task that is to be performed by the UAV 2 using the sensor 14, the performance of the sensor 14 or other UAV system, etc.) may be taken into account when selecting a set of control algorithms 24. In other words, which set of control algorithms 24 is selected may be dependent upon one or more further factors instead of or in addition to the hierarchical order of the sets of algorithms.

In this embodiment, each set of control algorithms 24 comprises (or is associated with) information that identifies the types of sensors (i.e. "sensor types") that that set of control algorithms 24 made be used to control. Thus, the searching process of step s14 may be performed by the processor 18 matching the "sensor type" determined at step s12 to a "sensor type" of a set of control algorithms 24. Thus, the processor 18 may search through, in order, the sets of control algorithms 24 and select the first set of control algorithms 24whose "sensor type" matches the "sensor type" of the sensor 14 (that was determined at step s12).

At step s16, the processor 18 selects a set of data interpretation algorithms 26 from the second library 22.

In this embodiment, this selection is performed by the processor 18 searching through, in order, the stored hierarchy of data interpretation algorithms 26, and selecting the first set of data interpretation algorithms 26 in that hierarchy that is applicable to a sensor having a the "sensor type" determined at step s12.

In other words, at step s16 the processor 18 searches, in order, the stored, ordered sets of data interpretation algorithms 26, and identifies the first set of data interpretation algorithms 26 that may be used to control the sensor 14 of the sensor unit 8 that was coupled to the sensor hub at step s4.

In some embodiments, other factors (such as the task that is to be performed by the UAV 2 using the sensor 14, the performance of the sensor 14 or other UAV system, etc.) may be taken into account when selecting a set of data interpretation algorithms 26. In other words, which set of data interpretation algorithms is selected may be dependent upon one or more further factors instead of or in addition to the hierarchical order of the sets of algorithms.

In this embodiment, each set of data interpretation algorithms 26 comprises (or is associated with) information that identifies the types of sensors (i.e. "sensor types") that that set of data interpretation algorithms 26 made be used to process/analyse measurements from. Thus, the searching process of step s16 may be performed by the processor 18 matching the "sensor type" determined at step s12 to a "sensor type" of a set of data interpretation algorithms 26. Thus, the processor 18 may search through, in order, the sets of data interpretation algorithms 26 and select the first set of data interpretation algorithms 26 whose "sensor type" matches the "sensor type" of the sensor 14 (that was determined at step s12).

At step s18, the processing and control module 12 controls the sensor 14 of the sensor unit 8 that was coupled to the sensor hub 10 at step s4.

In this embodiment, this controlling of the sensor 14 comprises the processor 18 generating a control signal for the sensor 14. The control signal may be generated using the set of control algorithms 24 that was selected at step s14. Also, the control signal may be generated using an input from the ground station (e.g. an input or instruction from a human operator). In this embodiment, the generated control signal is sent from the processor 18 to the sensor 14 via the sensor hub 10 and the sensor management module 16 coupled to that sensor 14.

In this embodiment, at step s18 the processing and control module 12 controls the sensor 14 to take measurements. The control signal generated by the processor 18 is sent from the processor 18 to the sensor 14 via the sensor hub 10 and the sensor management module 16 (which may translate the signal generated by the processor 18 into a format that is useable by the sensor 14). The control signal generated by the processor 18 comprises an instruction or command for the sensor 14 to capture data.

The control signal may additionally include other commands or instructions for the sensor 14 (e.g. commands specifying a direction in which the sensor 14 is to point, commands specifying an operational mode for the sensor 14, etc.)

At step s20, the sensor 14 receives the control signal and takes measurements.

At steps 22, the sensor measurements (i.e. the output of the sensor 14) are sent from the sensor 14 to the processor 18 of the processing and control module 12. ). In this embodiment, the sensor data is sent from the sensor 14 to the processor 18 via the sensor management module 16 coupled to the sensor 14 and the sensor hub 10.

At step s24, the processor 18 processes (i.e. performs data analysis on) the received sensor data.

In this embodiment, this analysis of the sensor data comprises the processor 18 implementing one or more data interpretation algorithms contained within the selected set of data interpretation algorithms (i.e. the set of data interpretation algorithms that was selected at step s16). The data analysis may be performed using an input from the ground station 4 (e.g. an input or instruction from a human operator, e.g. an instruction specifying how the sensor data is to be analysed).

At step s26, the processor 18 outputs the processed sensor data. In this embodiment, the processed sensor data is provided for use by a UAV system. For example, in some embodiments, the processed sensor data is used, by the processing and control module 12 (e.g. by the processor 18 of the processing and control module 12) e.g. to determine a control signal for a sensor 14 of a sensor unit 8, or to update an entry in a library 20, 22. Also for example, in some embodiments, the processed sensor data is provided for use by an onboard system of the UAV 2 that is remote from the processing and control module 12. Also for example, in some embodiments, the processed sensor data is provided for use by an entity that is remote from the UAV 2 (e.g. the processed sensor data may be sent to the ground station 4 via the data-link 6, e.g. for display to an operator).

Thus, a process implemented using the apparatus described above with reference to Figure 1 to 4 is provided.

The above described sensor interface is advantageously flexible. The sensor interface (including the sensor hub) can be used to support a wide range of sensors in a "plug and play" manner. In other words, a number of different types of sensor unit (i.e. sensor units that include different types of sensor to other sensor units) may be coupled (i.e. plugged in) to the sensor hub and may operate as described above. Thus, a common interface for a wide range of sensors is advantageously provided.

The sensor hub advantageously provides a common functional interface that is useable with a wide range of sensors. Using the sensor hub, these different sensors may be coupled to one or more sensor controllers for controlling the operations of those sensors, one or more sensor data processing modules, one or more compatible mission/task systems, and any other appropriate modules or systems.

Sensor units coupled to the sensor hub may easily be replaced by different, or updated, sensor units. Also, new sensor units may be easily coupled to the sensor hub (i.e. plugged in). Also, sensor units coupled to the sensor hub may easily be removed (uncoupled) from the sensor hub. Thus, it tends to be possible to easily change or update the sensor load-out of the UAV, and thereby configure the UAV to perform different roles (e.g. perform a surveillance operation, perform a cartography operation, etc.).

The sensor hub advantageously provides a common electrical interface that allows sensors to be changed or added without major alteration to the UAV electrical wiring and core avionics. The sensor hub may provide power (from common aircraft supplies) to the sensors.

Preferably, the connectors (i.e. plugs and sockets) with which the sensor units coupled to the sensor hub are the same, i.e. the sensor units use common connectors to couple to the sensor hub. This advantageously tends to facilitate the fitting and changing of sensor units to the sensor hub. Thus it tends to be possible to easily and quickly change UAV from carrying one set of sensors (that may enable the UAV to fulfil a particular role) to carrying a different set of sensors (that may enable the UAV to fulfil a different role).

The above described apparatus and method advantageously tends to reduce the time and costs of updating sensor systems, and a role fit, to a UAV. This tends to be due to the easy way in which sensor units may be coupled to, decoupled from, a central, common sensor hub.

The sensor hub advantageously provides a common 'plug and play' sensor interface between the sensors and the other systems (e.g. other UAV systems such as sensor controllers, or other systems that are remote from the UAV).

The sensor hub advantageously provides a common data interface which tends to facilitate the addition of new sensors. In some embodiments, the common high speed data interface provided by the sensor hub is 1000BaseT Ethernet interface. The Ethernet interface tends to: (1) have high bandwidth (e.g. 1Gbps full duplex); (2) allow for packet switching (which may be used to perform data partitioning using a managed switch to give an aggregate bandwidth much higher than that of a single link); (3) be resistant to obsolescence; and (4) have existing standards for guaranteed Quality of Service (which tends to provide for guaranteed bandwidth for critical messages).

Preferably, a common set of data messages are used to control and obtain data / status from the different sensors. Such data messages have a wide enough scope to cover the functionality of various sensors. Preferably, the structure of the messages for relaying control and data is independent of the data to be relayed. For example, the system may not contain a mechanism for handling full motion video. Instead it may have generic messages for transferring streamed data. The stream data messages can handle a wide range of data including audio, signal structure data etc as well as video. The data contained in the stream is identified using a number of strings: e.g. 'VIDEO', 'MPEG2' may be used to identify the stream as containing full motion video using MPEG2 compression.

Preferably, this common set of data messages is extensible. This would tend to allow the functionality and data content of the data messages to be extended beyond their original design, thereby allowing those data messages to be used to control and obtain data / status from the new sensors. This extensibility may be achieved by having generic data blocks which are by defined using textual fields. An extensible system can be used to access the new data and controls, using plug-in modules, without major redesign.

The above described apparatus and methods tend to provide cost savings, provide greater flexibility of platform use (i.e. enable the UAV to be used in a larger range of roles), and also allow for quicker role-fitting of the UAV.

The components of the above described system may be thought of as falling into one of two categories: (1) Data Agnostic Components and (2) Extensible Components. The Data Agnostic components are those that have no need to know anything specific about the sensor data and controls. These may be components which are responsible for data passing/storage (e.g. the sensor hub) or components which are completely independent of the sensor data and control (e.g. navigation systems onboard the UAV or at the ground station). The extensible components are those which interact with the sensors (and its specific data outputs and controls), e.g. the sensor management modules.

Advantageously, new sets of control algorithms (e.g. that allow a new type of sensor to be controlled, or that allows for sensors to be controlled more efficiently, or allows access to new sensor functionality, etc.) may be easily added to the first library. A new set of control algorithms may be added at any position in the hierarchy of sets of control algorithms. Also, it tends to be easy to update a set of control algorithms stored within the first library.

Advantageously, new sets of data interpretation algorithms (e.g. that allow a new type of data to be processed, or that allows for data to be processed more efficiently, in a different way, or to achieve different results) may be easily added to the second library. A new set of data interpretation algorithms may be added at any position in the hierarchy of sets of data interpretation algorithms. Also, it tends to be easy to update a set of data interpretation algorithms stored within the second library.

In the above embodiments, the sensor interface system is implemented using a UAV that is in communication with a ground station. However, in other embodiments, the sensor interface system is implemented by a different type of entity e.g. a different type of vehicle e.g. an autonomous land-based vehicle.

In the above embodiments, the sensor hub provides a common interface between a plurality of sensors and other entities. However, in other embodiments, there is only a single sensor unit or sensor.

In the above embodiments, the sensor hub provides a common interface between a plurality of sensors and the sensor controller and the ground station. However, in other embodiments the sensor hub provides a common interface between a plurality of sensors and one or more different type of entities (instead of or in addition the sensor controller and the ground station), for example, a mission/task implementation system, a route planning module, a navigation system, etc.

In the above embodiments, a sensor unit comprises a single sensor and a single sensor management unit. However, in other embodiments a sensor unit may not comprise a sensor management unit (i.e. the sensor unit may be sensor that is configured to be able to couple to and communicate with the sensor hub). In other embodiments, a sensor unit may comprise a different number of sensors e.g. more than one sensor. In other embodiments, a sensor unit may comprise a different number of sensor management units e.g. more than one sensor management unit.

In the above embodiments, the processor of the sensor controller determines the set of control algorithms that are to be used to create control commands for controlling a sensor by selecting those algorithms from a library of algorithms. However, in other embodiments the set of control algorithms that are to be used to control a sensor are provided in a different way. For example, in some embodiments a human operator specifies sets of algorithms or codes that are to be used to control certain the types of sensors.

In the above embodiments, the processor of the sensor controller determines the set of data interpretation algorithms that are to be used to interpret/analyse data from a sensor by selecting those algorithms from a library of data interpretation algorithms. However, in other embodiments the set of data interpretation algorithms that are to be used to interpret/analyse data from a sensor are provided in a different way. For example, in some embodiments a human operator specifies sets of data interpretation algorithms that are to be used to interpret/analyse data from certain the types of sensors.

In the above embodiments, the control algorithms in the first library are arranged in a hierarchy in order of preference (e.g. in order of efficiency, in order of greatest functionality, in order of robustness, etc.). However, in other embodiments the control algorithms in the first library are not arranged in a hierarchy.

In the above embodiments, the data interpretation algorithms in the second library are arranged in a hierarchy in order of preference (e.g. in order of efficiency, in order of greatest functionality, in order of robustness, etc.). However, in other embodiments the data interpretation algorithms in the second library are not arranged in a hierarchy.

In the above embodiments, sensor data (i.e. measurements taken by the sensors) is processed onboard the UAV by the processor of the sensor controller. However, in other embodiments sensor data is processed by a different entity which may be remote from the UAV (i.e. raw sensor data may be transmitted from the UAV, e.g. from the sensor hub, for processing by an entity that is remote from the UAV).

In the above embodiments, messages sent between the sensors and the sensor controller, via the sensor hub, include: configuration data (i.e. identification and operational information), control signals, and sensor measurements. However, in other embodiments one or more different types of information may be sent between the sensors and the sensors controller via the sensor hub instead of or in addition to any of those types of information sent in the above embodiments. Appropriate types of information include, but are not limited to: a configuration request (i.e. requests from the sensor hub for the sensor to send its configuration data), configuration data (i.e. configuration data that informs the other components in the system, including the sensor controller, what the capabilities of the sensor are etc.), navigation data (i.e. navigation data from an inertial sensor mounted to rigid airframe structure in the vicinity of the sensor mount), pointing commands (i.e. control signals for controlling a steerable sensor so that it points in a certain direction), pointing status information (i.e. a status message containing data specifying in which direction a steerable sensor is currently pointing), capture commands (i.e. control signals for controlling a sensor so that is captures data), capture status information (i.e. status information indicating when data capture has begun, ended or at a significant event), Sensor Control Commands (i.e. control signals for controlling sensor settings, modes, attributes etc.), sensor status information (i.e. an indication of the status of a sensor), sensor data (i.e. data captured by a sensor), sensor metadata (i.e. metadata associated with the captured sensor data, such as a time-stamp, etc.), track data (i.e. tracks/plots detected by a sensor), a file request (i.e. a request for a data file from a data store coupled to the sensor hub), file data (i.e. a data file from a store to which a file request has been sent), a Digital Terrain Elevation Database (DTED) request (i.e. a request for a DTED tile or list of DTED tiles to be returned from a database), a DTED List (i.e. a list of available DTED tiles), DTED data (i.e. data from a requested DTED tile), health data (i.e. status data indicating the health of a sensor and any faults detected etc.).

In some embodiments, sensor units (including the sensors, sensor management modules, control electronics, signal concentrators, etc) are mounted to a common assembly (often referred to as a 'hardback'). Such a hardback assembly may be fitted to the vehicle using any appropriate mounting apparatus. Also, an aerodynamic fairing may be applied.

In some embodiments, inertial sensors are mounted on a substantially rigid structure, in the vicinity of the sensor units (or the sensors). Such mounting tends to minimise movement of the inertial sensors relative the sensor mounts. Measurements of the inertial sensors may be used to perform geo-location, stabilization, etc. of a sensor.

In some embodiments, a user (at the ground station 4) may issue sensor commands, which may be fed through the processing and control module 12 and sensor hub 10. This advantageously ensures that the sensors 14 receive a single coordinated set of commands.

In some embodiments, the performance or operation of a sensor is monitored by analysing status data messages generated by that sensor. Some or all of this status data can be relayed to the ground station e.g. for analysis and/or for display to a user.

In the above embodiments, the sensor captures data in response to that sensor receiving a "capture command", i.e. an instruction for that sensor to begin capturing data. The output of the sensor may be in the form of data frames. Each data frame may comprise an image, a video frame, snippet of audio etc. In some embodiments, the sensor data (e.g. a data frame) is accompanied by metadata which may comprise a timestamp for that sensor data, a location at which that sensor data was captured, sensor settings/modes, sensor facings/pointing angles, etc.

In some embodiments, sensor data may be stored in a database for later use.

In some embodiments, the sensor controller or other data processing unit is configured to receive and process "track data" and/or "plot data" from one or more sensors. The terminology "track data" is used herein to refer to data that specifies a detected object, a position for that detected object, and, optionally, additional data which may include a velocity and/or an identity of the detected object. The "track of an object" (i.e. track data corresponding to an object) may be either a non-real time track (e.g. that may be detected once and/or be infrequently updated), or a real time track (which may be frequently updated in real-time, using sensor data). A data processing unit may receive track data, via the sensor hub, and may perform, on the received track data, a data fusion processes so as to combine the received track data with other data. Examples of such other data include, but are not limited to, previous track data from the same sensor, track data from other sensors onboard the vehicle, track data from other sources that are remote from the vehicle, etc. Fused track data may be made available for use by systems onboard the vehicle (e.g. navigation systems), or systems remote from the vehicle (e.g. at the ground station).

## Claims

1. A method of operating a sensor (14), the method comprising:
acquiring, by an intermediate module (10), from a sensor unit (8), configuration data, the sensor unit comprising the sensor (14), the configuration data relating to the sensor (14);
acquiring, by one or more further modules (18), from the intermediate module (10), the configuration data relating to the sensor (14); and
using the configuration data, acquiring, by one or more of the further modules (18), a set of algorithms comprising one or more algorithms selected from the group of algorithms consisting of:
control algorithms for controlling the operation of the sensor (14); and
data processing algorithms for processing sensor data output by the sensor (14).

2. A method according to claim 1, the method further comprising:
for each of one or more further sensor units (8), acquiring, by the intermediate module (10), from that further sensor unit (8), further configuration data, wherein each further sensor unit (8) comprises a further sensor (14) and the further configuration data acquired from that further sensor unit (8) relates to the further sensor (14) of that further sensor unit (8);
for each further sensor (14), acquiring, by one or more of the further modules (18), from the intermediate module (10), the further configuration data relating to that further sensor (14); and
for each further sensor (14), using the further configuration data relating to that further sensor (14), acquiring, by a further module (18) that acquired the further configuration data relating to that further sensor (14), a set of algorithms comprising one or more algorithms selected from the group of algorithms consisting of:
control algorithms for controlling the operation of that further sensor (14); and
data processing algorithms for processing sensor data output by that further sensor (14).

3. A method according to claim 2, wherein the sensor (14) and each of the further sensors (14) are different types of sensor.

4. A method according to claim 2 or 3, wherein the sensor (14) and each of the further sensors (14) are coupled to the intermediate module (10) using the same type of interface.

5. A method according to any of claims 1 to 4, wherein
the acquired set of algorithms comprises a control algorithm; and
the method further comprises:
using the acquired control algorithm, generating, by a further module (18), a control signal for the sensor (14); and
sending, by the further module (18) that generated the control signal, to the sensor (14), the control signal, thereby controlling the operation of the sensor (14).

6. A method according to claim 5, wherein the control signal is sent from the further module (18) to the sensor (14) via the intermediate module (10).

7. A method according to any of claims 1 to 6, wherein
the acquired set of algorithms comprises a data processing algorithm;
and
the method further comprises:
by the sensor (14), taking measurements and outputting sensor data;
receiving, by a further module (18) that acquired a data processing algorithm, the sensor data output by the sensor (14); and
by the further module (18) that acquired a data processing algorithm, using the acquired data processing algorithm, processing the sensor data output by the sensor (14).

8. A method according to claim 7, wherein the sensor data output by the sensor (14) is sent from the sensor (14) to the further module (18) that acquired a data processing algorithm via the intermediate module (10).

9. A method according to any of claims 1 to 8, wherein the step of acquiring one or more algorithms comprises, using the configuration data, selecting, from a database (20, 22) containing a plurality of different algorithms, one or more algorithms that are suitable for use with the sensor (14).

10. A method according to claims 9, wherein:
the plurality of different algorithms that are contained within the database (20,22) is a hierarchy of algorithms; and
the step of selecting one or more algorithms that are for suitable use with the sensor comprises selecting, from the hierarchy of algorithms, at least the first algorithm in the hierarchy that is suitable for use with the sensor (14).

11. A method according to any of claims 1 to 10, wherein:
the method further comprises acquiring, from the intermediate module (10), by the sensor unit (8), a request that configuration data relating to the sensor (14) of the sensor unit (8) be returned to the intermediate module (10); and
the step of sending the configuration data relating to the sensor (14) from the sensor unit (8) to the intermediate module (10) is performed in response to the sensor unit (8) receiving the request.

12. A method according to any of claims 1 to 10, wherein the intermediate module (10) and the sensor units (8) are onboard an unmanned air vehicle (2).

13. Apparatus for operating a sensor (14), the apparatus comprising:
a sensor unit (8) comprising the sensor (14);
an intermediate module (10) configured to acquire, from the sensor unit (8), configuration data relating to the sensor (14); and
one or more further modules (18) configured to:
acquire, from the intermediate module (10), the configuration data relating to the sensor (14); and
using the configuration data, acquire a set of algorithms comprising one or more algorithms selected from the group of algorithms consisting of: control algorithms for controlling the operation of the sensor (14), and data processing algorithms for processing sensor data output by the sensor (14).

14. A program or plurality of programs arranged such that when executed by a computer system or one or more processors it/they cause the computer system or the one or more processors to operate in accordance with the method of any of claims 1 to 12.

15. A machine readable storage medium storing a program or at least one of the plurality of programs according to claim 14.
